# EUROPEAN PATENT APPLICATION

(11) **EP 4 223 825 A1**
(43) Date of publication of application: **09.08.2023**
(21) Application number: 22154904.1
(22) Date of filing: 03.02.2022
(51) Int. Cl.: C08G 18/32, C07C 263/00, C07C 273/00, C08G 18/64, C08G 18/71, C09D 163/00, C08G 18/28, C08G 18/73, C08G 18/78

(54) **POLYURETHANE RESINS WITH EPOXY AND CYCLIC CARBONATE FUNCTIONAL GROUPS AND THEIR THERMOSETTING POLYMERS**

(71) Applicant: Covestro LLC, Pittsburgh, PA 15205 (US)
(72) Inventor: The designation of the inventor has not yet been filed
(74) Representative: Levpat

(57) **Abstract**

Provided is a dual-cure epoxy and cyclic carbonate-containing urethane compound comprising an oxidized cyclic carbonate containing allyl-functional-carbamate which comprises a reaction product of a cyclic carbonate containing allyl-functional-carbamate, a ketone, water, and a base, optionally a solvent, wherein, the cyclic carbonate containing allyl-functional-carbamate comprises a reaction product of an isocyanate-functional compound with (a) a cyclic carbonate compound having a hydroxyl group, and (b) one selected from the group consisting of (b1) allyl alcohol, and (b2) a compound of the formula HA-B-(X)ₙ wherein, A is O, N, or S, n is an integer from 1 to 3, B is a linear or branched C₁-C₁₅ alkyl group, and X is -CH=CDE or X is -F-O-G-CH=CDE, in which, D or E are H or a linear Ci-C₅ alkyl group or a branched C₁-C₅ alkyl group, F and G are H or the same or different linear or branched C₁-C₁₅ alkyl group, and wherein the dual-cure epoxy and cyclic carbonate-containing urethane compound contains both epoxy and cyclic carbonate-functional groups. The dual-cure epoxy and cyclic carbonate-containing urethane compound of the invention may be useful in the production of coatings, adhesives, sealants, films, elastomers, castings, and foams.

## Description

### FIELD OF THE INVENTION

The present invention relates in general to polymers, and more specifically to dual-cure epoxy and cyclic carbonate-containing urethane compounds and their thermosetting polymers. These dual-cure polymers contain at least one epoxy and at least one cyclic carbonate and; thus, can react with compounds that are reactive towards epoxies and towards cyclic carbonates.

### BACKGROUND OF THE INVENTION

High performance paint and coating systems are needed for many applications ranging from aircraft, ships, chemical plants, flooring, bridges, and many others. Although there are many coatings binder systems available, the two most prominent are epoxy coatings and polyurethane coatings.

Epoxy resin systems are often used as primers because they provide good adhesion to most substrates and provide a barrier for anticorrosion. A typical epoxy system involves a bisphenol-A (BPA) based epoxy resin that is cured with a multifunctional amine curing agent. Typically, liquid BPA epoxy resins are used such as EPON 828 from Hexion or DER 331 from Olin Chemicals. Amine curing agents can be simple compounds such as bis(p-amino cyclohexyl) methane (PACM), isophorone diamine (IPDA) or more complex amine compounds such as polyamide resins, polyamidoamine resins, polyphenalkamine resins, or epoxy resin adducts. Because the reactions between the amine curing agent and the epoxy resin start as soon as the two ingredients are mixed, these materials are provided separately as two-component systems (2K) which are mixed just prior to their application. The time after mixing the components during which the coating can still be applied is known as the pot-life. Sometimes the pot-life is defined as the time for the viscosity to double, however; the pot life for any given coating system is that time where the viscosity is suitable for application. More information about epoxy resin technology can be found in various reference materials including B. Ellis, ed., Chemistry and Technology of Epoxy Resins, Springer Science, 1993; H. Panda, Epoxy Resins Technology Handbook, 2nd Revised Edition, Asia Pacific Business Press, 2019; C. May, Epoxy Resins: Chemistry and Technology, 2nd Edition, Routledge, 2018.

In addition to amines, epoxy resins also react with themselves (homopolymerization), anhydrides, phenols, and/or thiols. An epoxy formulation may contain multiple different kinds of curing agents as well as the right conditions for homopolymerization.

Polyurethane coatings represent a class of high-performance systems that can be used for a number of different applications. Polyurethanes are highly desired for their durability, toughness, and abrasion resistance, which is believed to be a result of extensive hydrogen bonding. Two component (2K) polyurethane coatings involve the reaction of a polyol with a polyisocyanate. As with epoxy resins, the curing reactions start as soon as the components are mixed; therefore, the coating system is supplied in two packages that are mixed just prior to application. The polyol can be an acrylic polyol, a polyester polyol, a polyether polyol, a polyurethane polyol, or a polycarbonate polyol. The polyisocyanate component can be based on aromatic or aliphatic building blocks. Aromatic polyisocyanates react very rapidly, while aliphatic polyisocyanates react slower; however, it is possible to accelerate the curing with the use of catalysts. Aliphatic polyisocyanates are preferred for use where the coating requires weathering performance. More information about polyurethanes and their use in coatings can be found in various reference materials including Szycher's Handbook of Polyurethanes, 2nd edition, CRC Press, 2012; U. Meier-Westhues, Polyurethanes: Coatings, Adhesives and Sealants, Vincentz Network, 2007.

However, due to concerns about worker exposure to isocyanates, there is a desire to be able to make polyurethanes without using isocyanates at the point of application. A number of approaches have been explored including cyclic carbonate-amine chemistry and carbamate-aldehyde chemistry, among others [Polymer Bulletin 2019, 76 (6), 3233-3246; ChemSusChem 2019, 12 (15), 3410-3430; European Polymer Journal 2017, 87, 535-552; RSC Advances 2013, 3 (13), 4110-4129; Polymers for Advanced Technologies 2015, 26 (7), 707-761].

In making new coatings systems, it is desirable to maintain the polyurethane character because the hydrogen bonding it affords imparts significant toughness, durability, and abrasion resistance. Therefore, a system that results in crosslinked polyurethane materials, but uses a different crosslinking chemistry is desirable.

As described previously, epoxy chemistry is well known and used extensively in the field of thermosetting materials for applications in coatings, composites, and adhesives. Having an epoxy functional polyurethane can meet this need.

One approach to making epoxy-functional polyurethanes is that of glycidyl carbamate-functional resins. Glycidyl carbamate-functional resins are made by reacting isocyanate-functional resins with glycidol.

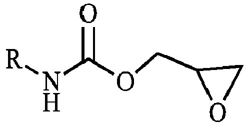

Glycidyl carbamates are typically synthesized by the reaction of a polyisocyanate with glycidol. In U.S. Pat. No 2,830,038, Pattison disclosed the synthesis of linear epoxy urethane compounds by the reaction of polytetramethylene ether glycol with an excess of toluene-2,4-diisocyanate (TDI), followed by reaction with glycidol. The product is mixed with a diamine and cured to form an elastomer.

Doss, in U.S. Pat. No. 3,440,230, disclosed the synthesis of a glycidyl carbamate resin by the reaction of a mixture of 2,4- and 2,6-toluene diisocyanate (TDI) with glycidol. The product could be cured at elevated temperature (180 °C for 30 minutes) between aluminum strips and formed an adhesive. Pittman et al. disclosed glycidol modified polyurethanes as treatments for textiles in U.S. Pat. No. 3,814,578. To prepare the glycidol-modified polyurethane, an isocyanate terminated prepolymer was reacted with glycidol. The product is applied to a fabric either from solvent or as an aqueous emulsion and cured.

Several researchers have studied the rearrangement reactions of glycidyl carbamates. In an early report, Iwakura and Taneda indicated that N-substituted phenyl glycidyl carbamate would rearrange at elevated temperatures to 3-phenyl-5-hydroxytetrahydro-1,3-oxazin-2-one (J. Org. Chem, 24, 1992 (1959)]) However, Farrisey and Nashu showed that, when catalyzed by a tertiary amine, phenyl glycidyl carbamate rearranges at elevated temperatures to 3-phenyl-4-hydroxymethyl-2-oxazolidones (J. Heterocyl. Chem., 7, 331-333 (1970)).

The group of Chen et al. reported the synthesis of glycidol-terminated polyurethanes (glycidyl carbamates) and found that they had good adhesion at low temperatures as well as good storage stability and room temperature curing (J. Appl. Polym. Sci., 51, 1199-1206 (1994)). A subsequent study showed that the glycidol-terminated polyurethanes had better impact strength, fracture energy, and adhesion than a conventional epoxy resin (J. Appl. Polym. Sci., 52, 1137-1151 (1994)). In EP0553701A2, Rehfuss, et al. reported a coating system made from reacting a polyisocyanate with glycidol to form the glycidyl carbamate resin and then curing it with a polyfunctional acid compound. Yeganeh et al. synthesized biodegradable epoxy terminated polyurethanes by end-capping of isocyanate terminated prepolymers with glycidol which were then cured with diamines to make thermosets (Eur. Polym. J. 41, 2370-2379 (2005); J. Polym. Sci. A Polym. Chem. 43, 2985-2006 (2005)). Yeganeh et al. also studied polyurethane elastomers made from isocyanate terminated prepolymers capped with glycidol that were then cured with a polyamic acid to form crosslinked elastomers (J. Appl. Polym. Sci. 103, 1776-1785 (2007)). Yeganeh et al. also studied the curing of epoxy polyurethanes using a novel phenolic functionalized polyamide resin (High Perf. Polym. 20, 126-145 (2008)). Solouck et al. synthesized isocyanate terminated prepolymers from difunctional polyols and diisocyanates that were then end-capped with glycidol. These were then cured with diamines to form crosslinked elastomers (Iran. J. Pharma. Sci., 4, 281-288 (2008)). Sun et al. studied the kinetics of the reaction of glycidol with isocyanate terminated prepolymers from aromatic and cycloaliphatic diisocyanates. The epoxy urethane terminated polymers were mixed with conventional BPA epoxy resins and cured and their underwater acoustic properties were studied (Polym. Bull. 69, 621-633 (2012)).

In a series of investigations, Webster et al. studied the synthesis of glycidyl carbamate-functional resins made from the reaction of glycidol with multifunctional polyisocyanates derived from 1,6-hexamethylene diisocyanate (HDI). In one paper the synthesis of multifunctional resins and their curing with amines to form coatings was studied (JCT Research, 2, 517-528 (2005)). In another paper, the self-crosslinking reaction at elevated temperature was studied as were the properties of coatings cured with the self-crosslinking reaction (Prog. Org. Coat., 57, 128-139(2006)). It was also shown that modification of the polyisocyanates with monofunctional alcohols, followed by reaction with glycidol could be used to moderate the viscosity of the resins. The results could be cured with amines or through self-crosslinking to form coatings (J. Coat. Tech. & Res., 7, 531-546 (2010); U.S. Pat. Nos. 9,051,413 and 9,593,258). Webster et al., also demonstrate in U.S. Pat. No. 8,852,458 that polyfunctional glycidyl carbamate resins could be blended with conventional BPA epoxy resins to form corrosion resistant coatings. Glycidyl carbamate-functional resins could be rendered water dispersible by partial replacement of glycidol with polyethylene glycol and cured using waterborne amine curing agents (J. Coat. Tech. Res., 6, 735-747 (2011); U.S. Pat. Nos. 7,776,956 and 9,676,895). To make highly flexible coatings linear glycidyl carbamate resins can be made and cured with amines (J. Coat. Tech. Res., 10(2), 141-151 (2012)). Hybrid sol-gel systems can also be synthesized by reactions with various silanes (Prog. Org. Coat., 66(1), 73-85 (2009); Prog. Org. Coat., 64(2-3) 128-137 (2009); Prog. Org. Coat., 63(4) 405-415 (2008); and U.S. Pat. No. 8,097,741).

All of these glycidyl carbamate resins are synthesized by reacting an isocyanate-functional material with glycidol. However, glycidol is very expensive and has various health hazards associated with it.

In another approach to the synthesis of epoxy-functional polyurethane resins, Ambrose et al., reported the reaction of isocyanate-functional compounds with a hydroxyl-functional polyepoxide having two or more epoxy groups per molecule (U.S. Pat. Nos. 4,699,814; and 4,749,743). An example of a hydroxyl-functional polyepoxide is a diglycerol polyglycidyl ether having three epoxy groups per molecule.

To reduce or eliminate problems in the art; therefore, a need exists in the art for dual-cure polyurethane resins containing both epoxy and cyclic carbonate-functional groups.

### SUMMARY OF THE INVENTION

Accordingly, the present invention reduces or eliminates problems inherent in the art by providing a dual-cure epoxy and cyclic carbonate-containing urethane compound comprising an oxidized cyclic carbonate containing allyl-functional-carbamate which comprises a reaction product of a cyclic carbonate containing allyl-functional-carbamate, a ketone, water, and a base, optionally in the presence of a solvent, wherein, the cyclic carbonate containing allyl-functional-carbamate comprises a reaction product of an isocyanate-functional compound with (a) a cyclic carbonate compound having a hydroxyl group, and (b) one selected from the group consisting of, (b1) allyl alcohol, and (b2) a compound of the formula: HA-B-(X)ₙ wherein, A is O, N, or S, n is an integer from 1 to 3, B is a linear or branched C₁-C₁₅ alkyl group, and X is -CH=CDE or X is -F-O-G-CH=CDE, in which, D or E are H or a linear C₁-C₅ alkyl group or a branched C₁-C₅ alkyl group, F and G are H or the same or different linear or branched C₁-C₁₅ alkyl group, and wherein the dual-cure epoxy and cyclic carbonate-containing urethane compound contains both epoxy and cyclic carbonate-functional groups. The dual-cure epoxy and cyclic carbonate-containing urethane compound of the invention may be useful in the production of coatings, adhesives, sealants, films, elastomers, castings, and foams.

These and other advantages and benefits of the present invention will be apparent from the Detailed Description of the Invention herein below.

### BRIEF DESCRIPTION OF THE FIGURES

The present invention will now be described for purposes of illustration and not limitation in conjunction with the figures, wherein:
FIG. 1 provides the synthetic route for POLYISO A-glycidyl carbamate resin containing cyclic carbonate groups;
FIG. 2 depicts the ¹³C NMR spectra of POLYISO A-allyl GLC carbamate and POLYISO A-GLC-GC resins; and
FIG. 3 shows ATR-FTIR spectra of POLYISO A-GLC-allyl carbamate and POLYISO A-GLC-GC resin.

### DETAILED DESCRIPTION OF THE INVENTION

The present invention will now be described for purposes of illustration and not limitation. Except in the operating examples, or where otherwise indicated, all numbers expressing quantities, percentages, and so forth in the specification are to be understood as being modified in all instances by the term "about."

Any numerical range recited in this specification is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited in this specification is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such sub-ranges would comply with the requirements of 35 U.S.C. §112(a), and 35 U.S.C. §132(a). The various embodiments disclosed and described in this specification can comprise, consist of, or consist essentially of the features and characteristics as variously described herein.

Any patent, publication, or other disclosure material identified herein is incorporated by reference into this specification in its entirety unless otherwise indicated, but only to the extent that the incorporated material does not conflict with existing definitions, statements, or other disclosure material expressly set forth in this specification. As such, and to the extent necessary, the express disclosure as set forth in this specification supersedes any conflicting material incorporated by reference herein. Any material, or portion thereof, that is said to be incorporated by reference into this specification, but which conflicts with existing definitions, statements, or other disclosure material set forth herein, is only incorporated to the extent that no conflict arises between that incorporated material and the existing disclosure material. Applicant reserves the right to amend this specification to expressly recite any subject matter, or portion thereof, incorporated by reference herein.

Reference throughout this specification to "various non-limiting embodiments," "certain embodiments," or the like, means that a particular feature or characteristic may be included in an embodiment. Thus, use of the phrase "in various non-limiting embodiments," "in certain embodiments," or the like, in this specification does not necessarily refer to a common embodiment, and may refer to different embodiments. Further, the particular features or characteristics may be combined in any suitable manner in one or more embodiments. Thus, the particular features or characteristics illustrated or described in connection with various or certain embodiments may be combined, in whole or in part, with the features or characteristics of one or more other embodiments without limitation. Such modifications and variations are intended to be included within the scope of the present specification.

The grammatical articles "a", "an", and "the", as used herein, are intended to include "at least one" or "one or more", unless otherwise indicated, even if "at least one" or "one or more" is expressly used in certain instances. Thus, these articles are used in this specification to refer to one or more than one (i.e., to "at least one") of the grammatical objects of the article. By way of example, and without limitation, "a component" means one or more components, and thus, possibly, more than one component is contemplated and may be employed or used in an implementation of the described embodiments. Further, the use of a singular noun includes the plural, and the use of a plural noun includes the singular, unless the context of the usage requires otherwise.

In a first aspect, the present invention is directed to a dual-cure epoxy and cyclic carbonate-containing urethane compound comprising an oxidized cyclic carbonate containing allyl-functional-carbamate which comprises a reaction product of a cyclic carbonate containing allyl-functional-carbamate, a ketone, water, and a base, optionally a solvent, wherein, the cyclic carbonate containing allyl-functional-carbamate comprises a reaction product of an isocyanate-functional compound with (a) a cyclic carbonate compound having a hydroxyl group, and (b) one selected from the group consisting of (b1) allyl alcohol, and (b2) a compound of the formula HA-B-(X)ₙ wherein, A is O, N, or S, n is an integer from 1 to 3, B is a linear or branched C₁-C₁₅ alkyl group, and X is -CH=CDE or X is -F-O-G-CH=CDE, in which, D or E are H or a linear C₁-C₅ alkyl group or a branched C₁-C₅ alkyl group, F and G are H or the same or different linear or branched C₁-C₁₅ alkyl group, and wherein the dual-cure epoxy and cyclic carbonate-containing urethane compound contains both epoxy and cyclic carbonate-functional groups.

In a second aspect, the present invention is directed to a process for producing a dual-cure epoxy and cyclic carbonate-containing urethane compound, the process comprising: (1) reacting an isocyanate-functional compound with (a) a cyclic carbonate compound having a hydroxyl group, and (b) one selected from the group consisting of (b1) allyl alcohol, and (b2) a compound of formula: HA-B-(X)ₙ (I), wherein, A is O, N, or S, n is an integer from 1 to 3, B is a linear or branched C₁-C₁₅ alkyl group, and X is -CH=CDE or X is -F-O-G-CH=CDE, in which, D or E are H or a linear C₁-C₅ alkyl group or a branched C₁-C₅ alkyl group, F and G are H or the same or different linear or branched C₁-C₁₅ alkyl group, to form an allyl-carbamate urethane containing cyclic carbonate; and (2) oxidizing the allyl-carbamate urethane containing cyclic carbonate to form the allyl-functional-carbamate, the oxidizing comprising (i) mixing the allyl-carbamate urethane containing a cyclic carbonate with a ketone, water, and a base, optionally a solvent, to form a mixture, and (ii) feeding an aqueous solution of oxidant into the mixture to form dual-cure epoxy and cyclic carbonate-containing urethane compound, wherein the dual-cure epoxy and cyclic carbonate-containing urethane compound contains at least one epoxy-functional group and at least one cyclic carbonate-functional group.

In a third aspect, the present invention is directed to a thermoset polymer comprising a reaction product of the dual-cure epoxy and cyclic carbonate-containing urethane compound according to one of the first or second aspects and a curing agent.

In a fourth aspect, the present invention is directed to one of a coating, an adhesive, a sealant, a film, an elastomer, a casting, a foam, and a composite comprising the dual-cure epoxy and cyclic carbonate-containing urethane compound according to one of the first or second aspects and a curing agent.

Thus, the present inventors have unexpectedly discovered dual-cure epoxy and cyclic carbonate-containing urethane compounds can be synthesized by reacting an isocyanate with a compound containing one hydroxyl group and a cyclic carbonate group and another compound containing either one hydroxyl group and an epoxy group or one hydroxyl group and one or more allyl groups followed by epoxidizing the carbon-carbon double bond of the allyl group(s) using dioxirane epoxidation. The resulting dual-cure epoxy and cyclic carbonate-containing urethane compounds can be cured into thermosetting coatings by reaction with curing agents reactive with both cyclic carbonate and epoxy groups. These dual-cure epoxy and cyclic carbonate-containing urethane compounds may be prepared by several processes.

The synthesis of a glycidyl carbamate resin is a two-step process according to the reaction scheme below: first the isocyanate is reacted with allyl alcohol and then the product is oxidized to the epoxy group. Allyl alcohol is an inexpensive reagent that can be added to an isocyanate in a first step to form an allyl carbamate compound. In a second step, oxidation (epoxidation) of the double bond converts the allyl carbamate into a glycidyl carbamate.

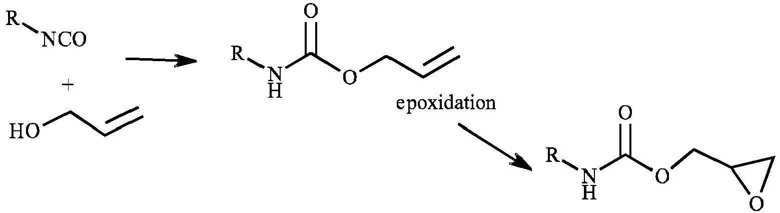

As a further approach, an epoxy urethane can be made from a first reaction of an isocyanate-functional compound with a compound containing a hydroxyl group and one or more allyl groups. The allyl groups are subsequently oxidized to covert the double bonds to epoxy groups as shown below.

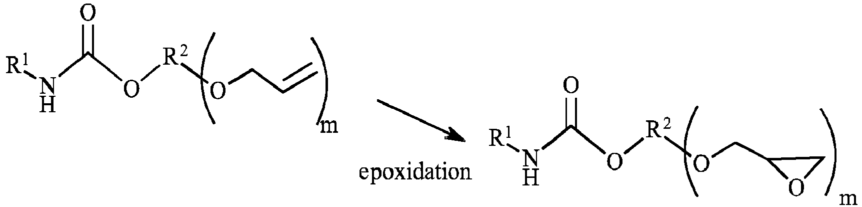

As a further approach, a dual-cure polyurethane resin containing epoxy-functional groups and cyclic carbonate-functional groups may be made from the reaction of an isocyanate-functional compound with a compound containing a hydroxyl group and one or more cyclic carbonate groups as well as with a compound containing a hydroxyl group and one or more allyl groups. The allyl groups are subsequently oxidized to covert the double bonds to epoxy groups as shown below.

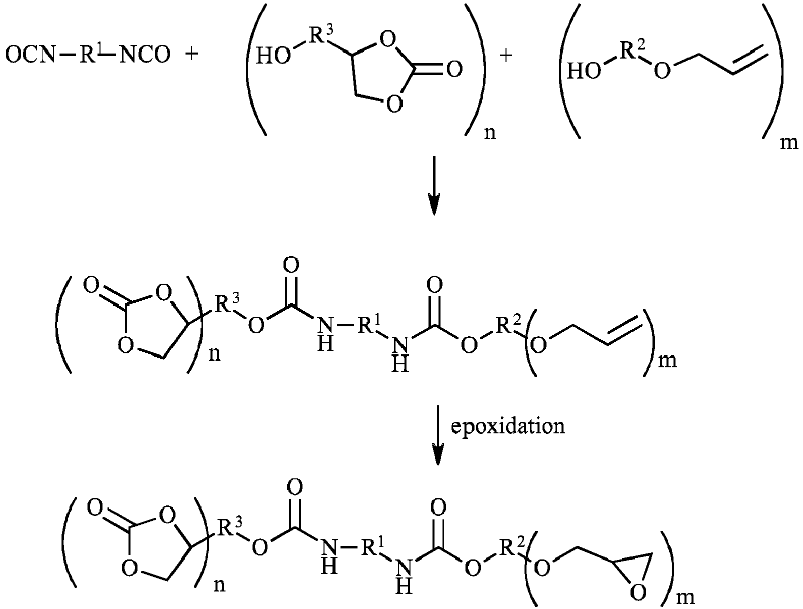

There are a number of approaches for converting terminal double bonds into epoxy groups. One of the more common approaches is to use m-chloroperbenzoic acid which reacts directly with a carbon-carbon double bond to convert it to the corresponding epoxide (*see*, *e.g.*, J. Am. Chem. Soc., 120, 9513-9516 (1998)). However, the by-product of the reaction is m-chlorobenzoic acid in stoichiometric amounts, which creates significant waste.

An alternative method for epoxidizing olefins involves dioxirane, which can be generated in situ from the reaction of a ketone with potassium peroxymonosulfate, also known as potassium caroate (potassium monoperoxysulfate) or oxone (J. Org. Chem. 45, 4758-4760 (1980)). This method has been found to be useful in epoxidizing a number of different types of carbon-carbon double bonds (Org. Process Res. Dev., 6, 405-406 (2002), ACS Sustain. Chem. Eng., 6, 5115-5121 (2018)).

As used herein, the term "polymer" encompasses prepolymers, oligomers, and both homopolymers and copolymers; the prefix "poly" in this context refers to two or more. As used herein, the term "molecular weight", when used in reference to a polymer, refers to the number average molecular weight, unless otherwise specified.

As used herein, the term "polyol" refers to compounds comprising at least two free hydroxyl groups. Polyols include polymers comprising pendant and terminal hydroxyl groups.

As used herein, the term "coating composition" refers to a mixture of chemical components that will cure and form a coating when applied to a substrate.

The terms "adhesive" or "adhesive composition" refer to any substance that can adhere or bond two items together. Implicit in the definition of an "adhesive composition" or "adhesive formulation" is the concept that the composition or formulation is a combination or mixture of more than one species, component or compound, which can include adhesive monomers, oligomers, and polymers along with other materials.

A "sealant" or "sealant composition" refers to a composition which may be applied to one or more surfaces to form a protective barrier, for example to prevent ingress or egress of solid, liquid or gaseous material or alternatively to allow selective permeability through the barrier to gas and liquid. In particular, it may provide a seal between surfaces.

A "casting" or "casting composition" refers to a mixture of liquid chemical components which is usually poured into a mold containing a hollow cavity of the desired shape, and then allowed to solidify.

A "composite" or "composite composition" refers to a material made from one or more polymers, containing at least one other type of material (e.g., a fiber) which retains its identity while contributing desirable properties to the composite. A composite has different properties from those of the individual polymers/materials which make it up.

The terms "cured," "cured composition" or "cured compound" refer to components and mixtures obtained from reactive curable original compound(s) or mixture(s) thereof which have undergone chemical and/or physical changes such that the original compound(s) or mixture(s) is(are) transformed into a solid, substantially non-flowing material. A typical curing process may involve crosslinking.

The term "curable" means that an original compound(s) or composition material(s) can be transformed into a solid, substantially non-flowing material by means of chemical reaction, crosslinking, radiation crosslinking, or the like. Thus, compositions of the invention are curable, but unless otherwise specified, the original compound(s) or composition material(s) is(are) not cured.

The components useful in the present invention comprise a polyisocyanate. As used herein, the term "polyisocyanate" refers to compounds comprising at least two unreacted isocyanate groups, such as three or more unreacted isocyanate groups. The polyisocyanate may comprise diisocyanates such as linear aliphatic polyisocyanates, aromatic polyisocyanates, cycloaliphatic polyisocyanates and aralkyl polyisocyanates.

Although any isocyanate compound can be used, it is preferred to use isocyanate compounds that have two or more isocyanate groups, so that the final cyclic carbonate and epoxy-functional urethane compound can be cured into a thermoset material. Examples of diisocyanate compounds include 1,6-hexamethylene diisocyanate, 2,4-toluene diisocyanate, 2,6-toluene diisocyanate and mixtures thereof, methylene diphenyl diisocyanate, isophorone diisocyanate, bis(4-isocyanatocyclohexyl) methane, tetramethylxylene diisocyanate, xylylene diisocyanate, hydrogenated xylylene diisocyanate, 2,2,4- and 2,4,4- trimethyl-1,6-hexamethylene diisocyanate, and 4-isocyanatomethyl-1,8-octane diisocyanate. Polyisocyanate compounds can also be used including the biuret and isocyanurate adducts of diisocyanates, polyisocyanates made by reacting a polyol with a diisocyanate, uretdione adducts, and allophanate polyisocyanates.

Another type of polyisocyanate that can be used is one prepared by the free radical copolymerization of a compound containing an isocyanate and a carbon-carbon double bond that can be polymerized using a free radical chain growth polymerization. Examples are m-TMI (α,α-dimethyl meta-isopropenyl benzyl isocyanate) and isocyanato ethyl methacrylate (IEM). These monomers can be combined with others in a copolymerization to yield a polymer having multiple isocyanate groups.

Examples of compounds having the formula HA-B-(X)ₙ are trimethylolpropane diallyl ether, ethylene glycol monoallyl ether, 3-butene-1-ol, 4-pentene-1-ol, 4-methyl-3-pentene-1-ol, 5-hexene-1-ol, 4-hexene-1-ol, 3-hexene-1-ol, 4-methyl-3-hexene-1-ol, 2-ethyl-4-pentene-1-ol, oleyl alcohol, and the like.

Examples of cyclic carbonate compounds containing a hydroxyl group include glycerin carbonate (4-(hydroxymethyl)-1,3-dioxolan-2-one), 5-hydroxy-1,3-dioxan-2-one, 5-ethyl-5-(hydroxymethyl)-1,3-dioxane-2-one, 5 methyl-5-(hydroxymethyl)-1,3-dioxane-2-one, and the like.

The first step may occur in the absence or presence of solvent and in the absence of presence of a catalyst. Suitable solvents include toluene, xylenes, n-butyl acetate, t-butyl acetate, amyl acetate, acetone, methyl ethyl ketone, methyl amyl ketone, dihydrolevoglucosenone (CYRENE), N-methyl 2-pyrrolidone, N-ethyl-2-pyrrolidone, tetrahydrofuran, diethyl ether, dimethylsulfoxide, dimethyl formamide, and dimethylacetamide. It is preferred to carry out the reaction in the absence of solvent, or, if solvent is needed due to viscosity, to use a solvent that can be readily removed after the reaction is complete.

Catalysts for the reaction include tin compounds such as dibutyl tin dilaurate, dibutyl tin diacetate, tertiary amines such as 1,4-diazabicyclo[2.2.2]octane (DABCO) and other metal salts based on bismuth, iron, zirconium, or zinc. It is preferred to carry out the reaction without a catalyst or with a tin-based catalyst.

After reacting the isocyanate, step two, epoxidation of the double bond to an epoxide occurs in a two-phase (biphasic) system. The allyl carbamate synthesized in step one is dissolved in a solvent. Preferably the solvent is a ketone so that it can function as the source of ketone for the formation of the dioxirane. Solvents such as acetone, methyl ethyl ketone, methyl amyl ketone, and cyclohexanone can be used, with acetone being the preferred solvent. A mixture of a ketone and another solvent may also be used. Suitable solvents are those listed above for the isocyanate-allyl alcohol reaction.

A base is needed in the aqueous phase to maintain basic conditions to stabilize the dimethyldioxirane. Inorganic bases such as sodium hydrogen carbonate (sodium bicarbonate), sodium hydroxide, sodium carbonate, potassium bicarbonate, potassium carbonate, potassium hydroxide, and the like may be used, with sodium bicarbonate being preferred.

The biphasic reaction mixture may be stirred vigorously to create interfacial surface area between the organic and aqueous phases.

An oxidant (oxone) is dissolved in water and added slowly to the reaction mixture. A slow addition rate is preferred to yield the highest conversion of allyl groups to glycidyl groups. The reaction can occur at temperatures ranging from 2 °C to 90 °C, with ambient temperature of 18-25 °C being preferred.

Optionally, a phase transfer catalyst can be used. Suitable phase transfer catalysts include tetrabutyl ammonium hydrogen sulfate, quaternary ammonium compounds such as benzyl triethyl ammonium chloride, and the like. Ionic liquids can also function as phase transfer compounds such as 1-dodecyl-3-methylimidazolium tetrafluoroborate (DoDMIImBF₄). Crown ethers such as 18-crown-6 can also be used as a phase transfer catalyst.

After completion of the reaction, an organic solvent is added to extract the product from the reaction mixture and the organic and aqueous layers are separated. The organic layer is washed several times with aqueous sodium chloride and then the organic layer is separated from the aqueous layer, and the solvent removed by evaporation to yield the epoxy urethane resin.

Formulations may be prepared with the dual-cure epoxy and cyclic carbonate-containing urethane compounds and a multifunctional amine curing agent and, optionally, catalysts, solvents, additives, pigments. Each of the epoxy and cyclic carbonate functional groups may react with the amine curing agents as shown below.

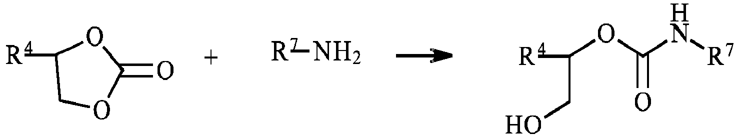

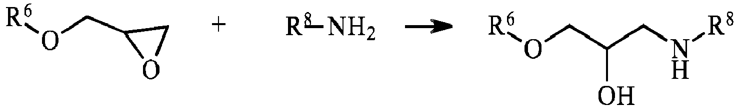

Suitable amine curing agents are those which are soluble or miscible in a coating composition of the invention. Amine curing agents known in the art include, for example, diethylenetriamine, triethylenetetramine, tetraethylene-pentamine, etc. as well as 2,2,4-and/or 2,4,4-trimethylhexamethylenediamine, 1,2-and 1,3-diaminopropane, 2,2-dimethylpropylenediamine, 1,4-diaminobutane, 1,6-hexanediamine, 1,7-diaminoheptane, 1,8-diaminooctane, 1,9-diaminononae, 1,12-diaminododecane, 4-azaheptamethylenediamine, N,N"-bis(3-aminopropyl)butane-1,4-diamine, 1-ethyl-1,3-propanediamine, 2,2(4),4-trimethyl-1,6-hexanediamin, bis(3-aminopropyl)piperazine, N-aminoethylpiperazine, N,N-bis(3-aminopropyl)ethylenediamine,; 2,4(6)-toluenediamine, dicyandiamine, melamine formaldehyde, tetraethylenepentamine, 3-diethylaminopropylamine, 3,3'-iminobispropylamine, tetraethylenepentamine, 3-diethylaminopropylamine, and 2,2,4- and 2,4,4-trimethylhexamethylenediamine. Exemplary cycloaliphatic amine curing agents include, but are not limited to, 1,2- and 1,3-diaminocyclohexane, 1,4-diamino-2,5-diethylcyclohexane, 1,4-diamino-3,6-diethylcyclohexane, 1,2-diamino-4-ethylcyclohexane, 1,4-diamino-2,5-diethylcyclo-hexane, 1,2-diamino-4-cyclohexylcyclohexane, isophorone-diamine, norbornanediamine, 4,4'-diaminodicyclohexylmethane, 4,4'-diaminodicyclohexylethane, 4,4'-diaminodicyclohexylpropane, 2,2-bis(4-aminocyclohexyl)propane, 3,3'-dimethyl-4,4'-diaminodicyclohexylmethane, 3-amino-1-(4-aminocyclohexyl)propane, 1,3- and 1,4-bis(aminomethyl)cyclohexane, and 1-cyclohexyl-3,4-dimino-cyelohexane. As exemplary araliphatic amines, in particular those amines are employed in which the amino groups are present on the aliphatic radical for example m- and p-xylylenediamine, or their hydrogenation products as well as diamide diphenylmethane, diamide diphenylsulfonic acid (amine adduct), 4,4'-methylenedianiline, 2,4-bis(p-aminobenzyl)aniline, diethyltoluenediamine, and m-phenylene diamine. The amine curing agents may be used alone or as mixtures.

Suitable amine-epoxide adducts are, for example, reaction products of diamines such as, for example, ethylenediamine, diethylenetriamine, triethylenetetramine, m-xylylenediamine and/or bis(aminomethyl)cyclohexane with terminal epoxides such as, for example, polyglycidyl ethers of polyhydric phenols listed above.

Preferably, amine curing agents used with the coating formulations of the invention are PACM (bis(para-aminocyclohexyl)methane), diethylene triamine (DETA), and 4,4'-methylene dianiline (MDA). Stoichiometry ratios of amine to oxirane of the coating compositions may be based on amine hydrogen equivalent weight (AHEW) and on weight per epoxide (WPE). A formulation of 1:1 was based on one epoxide reacted with one amine active hydrogen.

Solvents may be used in the formulation of the thermosets of the invention. Suitable solvents can include toluene, xylenes, n-butyl acetate, t-butyl acetate, amyl acetate, acetone, methyl ethyl ketone, methyl amyl ketone, dihydrolevoglucosenone (CYRENE), N-methyl 2-pyrrolidone, N-ethyl-2-pyrrolidone, ethyl ethoxy propionate, tetrahydrofuran, diethyl ether, dimethylsulfoxide, dimethyl formamide, and dimethylacetamide. Curing can occur at ambient conditions or at elevated temperatures.

A coating composition of the invention may further contain at least one coating additive to, for example, enhance the composition's coating efficiency. Examples of suitable coating additives include, but are not limited to, leveling and flow control agents such as silicones, fluorocarbons or cellulosics; extenders; plasticizers; flattening agents; pigment wetting and dispersing agents; ultraviolet (UV) absorbers; UV light stabilizers; defoaming and antifoaming agents; anti-settling, anti-sag and bodying agents; anti-skinning agents; anti-flooding and anti-floating agents; and corrosion inhibitors. Specific examples of such additives can be found in Raw Materials Index, published by the National Paint & Coatings Association, 1500 Rhode Island Avenue, N.W., Washington, D.C. 20005. Further examples of such additives may be found in U.S. Pat. No. 5,371,148.

Examples of flattening agents include, but are not limited to, synthetic silica, available from the Davison Chemical Division of W. R. Grace & Company as SYLOID, polypropylene, available from Hercules Inc., as HERCOFLAT, synthetic silicate, available from J. M. Huber Corporation, as ZEOLEX.

Examples of viscosity, suspension, and flow control agents include, but are not limited to, polyaminoamide phosphate, high molecular weight carboxylic acid salts of polyamine amides, and alkylene amine salts of an unsaturated fatty acid, all available from BYK Chemie U.S.A. as ANTI TERRA. Further examples include, but are not limited to, polysiloxane copolymers, polyacrylate solution, cellulose esters, hydroxyethyl cellulose, hydroxypropyl cellulose, polyamide wax, polyolefin wax, hydroxypropyl methyl cellulose, polyethylene oxide, and the like.

Where formulated as a coating, the inventive compositions may be applied to various substrates including, but not limited to, metals (e.g., aluminum, steel), plastics, ceramics, glass, natural materials, and concrete. The substrates may optionally be cleaned prior to coating to remove processing oils or other contaminants. The substrates may also be pretreated to improve adhesion and corrosion resistance. Additionally, a primer may be applied first to the substrate followed by application of the coating of the invention. Alternatively, the coating of the invention can be applied to the substrate first, followed by a topcoat of another or similar material.

The compositions of the invention may be contacted with a substrate by any methods known to those skilled in the art, including but not limited to, spraying, dipping, flow coating, rolling, brushing, pouring, squeegeeing, and the like. In some embodiments, the inventive compositions may be applied in the form of paints or lacquers onto any compatible substrate. In certain embodiments, the inventive composition is applied as a single layer. In other embodiments, the composition of the present invention may be applied as multiple layers as needed.

The coatings of the invention may be applied to various substrates including aluminum, steel, concrete, and plastic. The substrates may be cleaned to remove processing oils or other contaminants prior to coating. The substrates may also be pretreated to improve adhesion and corrosion resistance. A primer may be applied first to the substrate followed by application of the coating of the invention. Alternatively, the coating of the invention can be applied to the substrate first, followed by a topcoat of another or similar technology.

### EXAMPLES

The non-limiting and non-exhaustive examples that follow are intended to further describe various non-limiting and non-exhaustive embodiments without restricting the scope of the embodiments described in this specification. All quantities given in "parts" and "percents" are understood to be by weight, unless otherwise indicated.

Although described herein in the context of a coating, those skilled in the art will recognize that the principles of the present invention are equally applicable to adhesives, sealants, films, elastomers, castings, foams, and composites.

The following materials were used in preparation of the Examples:
- POLYISO A: a polyfunctional aliphatic isocyanate resin based on hexamethylene diisocyanate (HDI) having an NCO content of 19.5 ± 0.5% and a viscosity of 450 ± 150 mPa·s @ 25 °C; commercially available from Covestro LLC as DESMODUR N31100;
- ALLYL ALCOHOL: commercially available from Sigma-Aldrich;
- GLC: glycerin carbonate, commercially available from Huntsman as JEFFSOL GC;
- CATALYST A: dibutyltin dilaurate 95% (DBTDL), one drop is ~ 20-30 mg, commercially available from Sigma-Aldrich;
- OXIDANT A: potassium peroxysulfate, commercially available from Sigma-Aldrich as OXONE;
- BASE A: sodium hydrogen carbonate, commercially available from Alfa Aesar;
- CROSSLINKER A: para-aminocyclohexyl methane (PACM), commercially available from Evonik;
- SOLVENT A: acetone, commercially available from Alfa Aesar;
- SOLVENT B: dichloromethane, commercially available from Alfa Aesar;
- SOLVENT C: ethyl acetate, commercially available from Alfa Aesar;
- SOLVENT D: chloroform, commercially available from_VWR;
- DI water: de-ionized water;
- MEK: methyl ethyl ketone, commercially available from VWR International; and
- BRINE: saturated aqueous solution of NaCl, prepared by dissolving 500 g NaCl (certified ACS, Sigma-Aldrich) into 1 L of DI water at room temperature.

The following methods were used in the examples for the characterization of the compounds synthesized and materials prepared. FTIR measurements were made with a THERMO NICOLET 8700 FTIR spectrometer. Spectra acquisitions were based on 64 scans with data spacing of 4.0 cm⁻¹ in the range of 4000-500 cm⁻¹. NMR measurements were made at 25 ° C using a BRUKER AVANCE 400 MHz instrument and processed with TOPSPIN software. All measurements were made using CDCl₃ as solvent. The bulk viscosity of samples was measured using an ARES Rheometer at room temperature.

Epoxide equivalent weight (EEW, g/eq) of the epoxy products was determined by epoxy titration according to ASTM D1652-11 (2019). Impact tests were measured according to ASTM D2794 -93 (2019) with a BYK-GARDNER Heavy Duty Impact Tester Model IG-1120, with a 1.8 kg (4 lb.) mass and 1.27 cm (0.5 in.) diameter round-nose punch. MEK double rubs of the cured film were determined according to ASTM D5402-19. Coatings that passed 400 double rubs without mar were considered fully cured. Film thickness was measured with a BYKO-TEST 8500. Konig pendulum hardness and pencil hardness were determined according to ASTM D4366-16 (2021) and ASTM D3363-20, respectively. The adhesion of coatings on steel substrate was evaluated using crosshatch adhesion ASTM D3359-17.

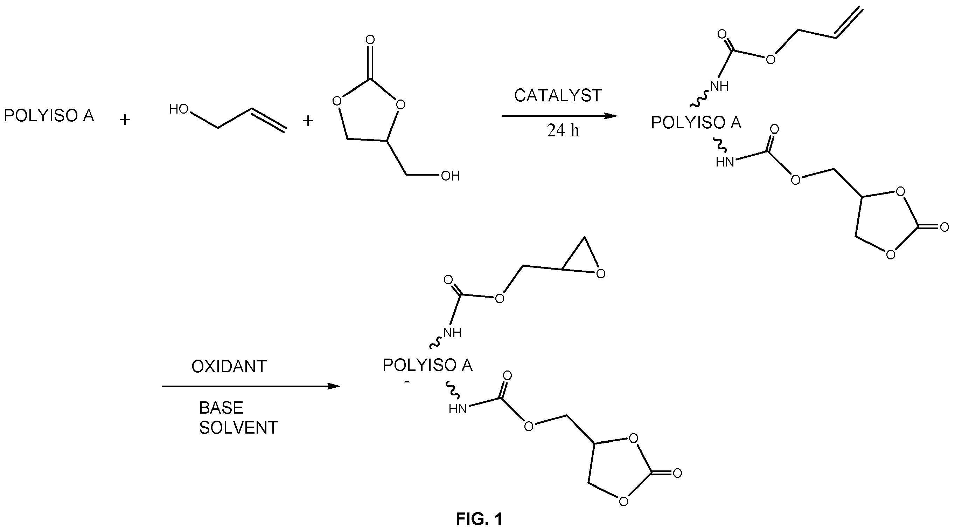

### Ex. 1 - Synthesis of POLYISO A-GLC-GC resin (FIG. 1)

### Step one: Synthesis of POLYISO A-GLC-allyl carbamate

A mixture containing ALLYL ALCOHOL (2.904 g, 50 mmol), GLC (6.14 g, 52 mmol), and CATALYST A (0.3 wt. %) was stirred at room temperature. POLYISO A (21.5 g, 100 mmol) was added dropwise. After completion of the drop-wise addition, the reaction solution was stirred at room temperature overnight. Infrared spectroscopic analysis was performed to determine reaction completion by monitoring the disappearance of isocyanate peak at 2275 cm⁻¹. The resulting POLYISO A-allyl carbamate was directly used for the next step without purification. At this step an isocyanate was reacted with a compound containing one hydroxyl group and a cyclic carbonate group and another compound containing one hydroxyl group and one or more allyl groups.

¹H NMR (400 MHz, CDCl₃) δ 5.89 - 5.72 (m), 5.40 (s), 5.19 (d, J = 17.2 Hz), 5.09 (d, J = 10.4 Hz), 5.02 (s), 4.84 (s), 4.55 - 4.39 (m), 4.31 - 4.13 (m), 4.11 - 3.95 (m), 3.76 (s), 3.62 (s), 3.16 (d, J = 5.6 Hz), 3.06 (d, J = 6.2 Hz), 1.94 (d, J = 1.5 Hz), 1.53 (s), 1.38 (d, J = 27.8 Hz), 1.35 - 1.16 (m).

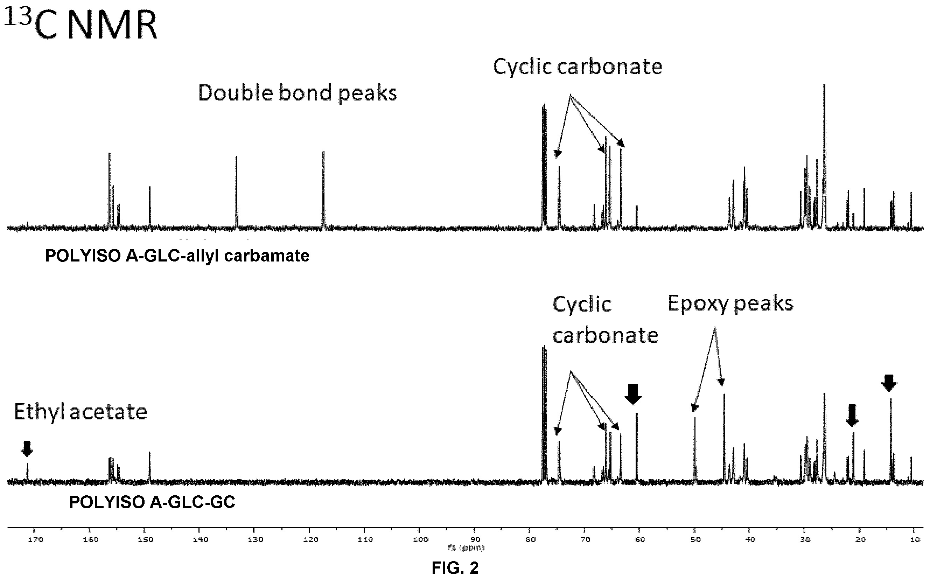

¹³C NMR (101 MHz, CDCl₃) δ 156.38, 155.70, 154.78, 154.55, 149.04, 133.13, 117.43, 77.49, 74.57, 68.23, 66.76, 66.48, 66.02, 65.33, 63.34, 60.43, 43.58, 42.82, 40.99, 40.86, 40.35, 30.60, 26.34, 22.25, 22.01, 21.09, 19.16, 14.22, 14.02, 13.69, 10.50. FIG. 2 is the ¹³C NMR spectrum of POLYISO A-allyl GC (glycidyl carbamate) resin.

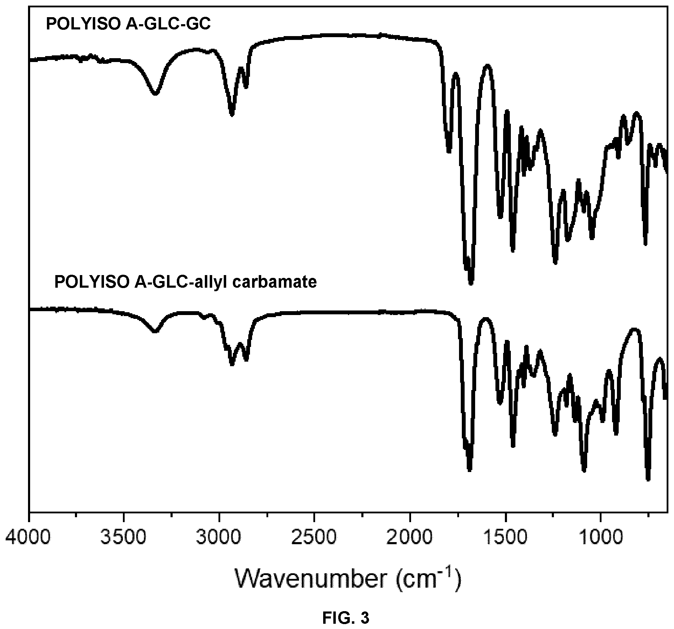

ATR-FTIR: 3335, 2933, 2859, 1712, 1689, 1530, 1461, 1404, 1350, 1240, 1181, 1135, 1088, 991, 921, 752, 665 cm⁻¹. FIG. 3 is the ATR-FTIR spectrum of POLYISO A-allyl GC (glycidyl carbamate) resin.

### Step two: Epoxidation of POLYISO A-GLC-allyl carbamate

To a one L, three-neck, round bottom flask equipped a mechanical stirring apparatus, the POLYISO A-GLC-allyl carbamate (30.6 g 0.1 mol) made in step one, SOLVENT A (300 mL), and BASE A (51.0 g, 0.607 mmol) were added. OXIDANT A aqueous solution (125.0 g, 0.407 mol in 900 mL D.I. water) was added into the reaction mixture by a piston pump at an addition rate from 2 mL/min to 4 mL/ min. After finishing the addition of OXIDANT A solution, the reaction mixture was kept stirring for another hour. Then SOLVENT C (300 mL) was added into flask. The reaction mixture was kept stirring for additional ten minutes to let the product dissolve in SOLVENT C. After the dissolution was complete, the clear solution was transferred to a separating funnel. The water layer was washed with SOLVENT C (50 mL) once. The combined SOLVENT C was washed using BRINE (3 x 50 mL). The light yellow and clear SOLVENT C solution was dried by magnesium sulfate. After removal of solvent by rotary evaporator and vacuum oven, 31.5 g (100% yields) resin was obtained. The double bond conversion was 100% analyzed by ¹³C NMR spectroscopy and cyclic carbonate remains inert. The equivalent molecular weight was 671.6 g/mol. The viscosity of the resulting resin was 93798 mPa·s. At this step epoxidizing of the carbon-carbon double bond of the allyl group(s) using dioxirane epoxidation was performed.

¹H NMR (400 MHz, CDCl₃) δ 5.40 (dd, *J* = 11.4, 5.9 Hz), 5.27 - 4.98 (m), 4.85 (s), 4.47 (t, *J* = 8.6 Hz), 4.33 (d, *J* = 12.3 Hz), 4.23 (ddd, *J* = 14.1, 8.5, 2.9 Hz), 4.12 - 3.96 (m), 3.74 (d, *J* = 11.9 Hz), 3.62 (s), 3.21 - 3.13 (m), 3.07 (dt, *J =* 13.0, 4.7 Hz), 2.74 (t, *J* = 4.5 Hz), 2.55 (dd, *J* = 4.6, 2.6 Hz), 1.95 (s), 1.66 - 1.49 (m), 1.38 (d, *J* = 25.9 Hz), 1.34-1.19 (m).

¹³C NMR (101 MHz, CDCl₃) δ 156.38, 156.17, 155.73, 154.84, 154.58, 149.06, 149.06, 74.59, 74.59, 66.03, 65.23, 65.23, 63.38, 49.93, 44.58, 27.69, 26.26, 22.25, 22.00, 19.15, 14.01, 13.69, 10.49. FIG. 2 is the ¹³C NMR spectrum of POLYISO A-GLC-GC resin.

ATR-FTIR: 3338, 2934, 2860, 1796, 1708, 1683, 1527, 1463, 1403, 1372, 1239, 1175, 1089, 1047, 908, 859, 766, 714 cm⁻¹. FIG. 3 is the ATR-FTIR spectrum of POLYISO A-GLC-GC resin.

### Coating preparation and evaluation

The POLYISO A-GLC-GC resin from Ex. 1 was mixed with CROSSLINKER A at different molar ratios (1:2 and 1:4). The coating formulations were applied on to iron phosphate pretreated 22-gauge steel test panels purchased from Q-PANEL. Coating application was made using a drawdown bar for a final dry film thickness of approximately 80 µm. Coated panels were cured at room temperature for six days and placed in an oven at 80 °C for 45 minutes. The results of the coating evaluation are shown in Table I.

**Table I**

| **Test** | **Ratio of resin to NH groups** | | | |
|---|---|---|---|---|
| | **1:2** | | **1:4** | |
| | **RT** | **HT** | **RT** | **HT** |
| Pencil hardness | 4B | HB | 3B | H |
| Crosshatch adhesion | 5B | 5B | 5B | 5B |
| Thickness (µm) | 91 | 99 | 77 | 100 |
| MEK | 3 | 15 | 14 | 1 |
| König hardness | 9 | 51 | 14 | 90 |
| Impact (inch-lb) | 160 | 40 | 8 | 0 |

| | | | | |
|---|---|---|---|---|
| RT: room temperature for 6 days HT: 80 °C for 45 minutes | | | | |

This specification has been written with reference to various non-limiting and non-exhaustive embodiments. However, it will be recognized by persons having ordinary skill in the art that various substitutions, modifications, or combinations of any of the disclosed embodiments (or portions thereof) may be made within the scope of this specification. Thus, it is contemplated and understood that this specification supports additional embodiments not expressly set forth herein. Such embodiments may be obtained, for example, by combining, modifying, or reorganizing any of the disclosed steps, components, elements, features, aspects, characteristics, limitations, and the like, of the various non-limiting embodiments described in this specification. In this manner, Applicant reserves the right to amend the claims during prosecution to add features as variously described in this specification, and such amendments comply with the requirements of 35 U.S.C. §112(a), and 35 U.S.C. §132(a).

Various aspects of the subject matter described herein are set out in the following numbered clauses:
Clause 1. A dual-cure epoxy and cyclic carbonate-containing urethane compound comprising an oxidized cyclic carbonate containing allyl-functional-carbamate which comprises a reaction product of a cyclic carbonate containing allyl-functional-carbamate, a ketone, water, and a base, optionally a solvent, wherein, the cyclic carbonate containing allyl-functional-carbamate comprises a reaction product of an isocyanate-functional compound with (a) a cyclic carbonate compound having a hydroxyl group, and (b) one selected from the group consisting of (b1) allyl alcohol, and (b2) a compound of the formula HA-B-(X)ₙ wherein, A is O, N, or S, n is an integer from 1 to 3, B is a linear or branched C₁-C₁₅ alkyl group, and X is -CH=CDE or X is -F-O-G-CH=CDE, in which, D or E are H or a linear C₁-C₅ alkyl group or a branched C₁-C₅ alkyl group, F and G are H or the same or different linear or branched C₁-C₁₅ alkyl group, and wherein the dual-cure epoxy and cyclic carbonate-containing urethane compound contains both epoxy and cyclic carbonate-functional groups.
Clause 2. The dual-cure epoxy and cyclic carbonate-containing urethane compound according to Clause 1, wherein the isocyanate-functional compound is selected from the group consisting 1,4-tetramethylene diisocyanate, 1,6-hexamethylene diisocyanate, 2,2,4-trimethyl-1,6-hexamethylene diisocyanate, 2,4,4-trimethyl-1,6-hexamethylene diisocyanate, 1,12-dodecamethylene diisocyanate, cyclohexane-1,3-diisocyanate, cyclohexane-1,4-diisocyanate, 1-isocyanato-2-isocyanato-methyl cyclopentane, 1-isocyanato-3,3,5-trimethyl-5-isocyanato-methylcyclohexane, bis-(4-isocyanatocyclohexyl)methane, 1,3-bis(isocyanatomethyl)-cyclohexane, 1,4-bis(isocyanatomethyl)-cyclohexane, bis-(4-isocyanato-3-methyl-cyclohexyl)-methane, α,α,α',α'-tetramethyl-1,3-xylene diisocyanate, α,α,α',α'-tetramethy-1,4-xylene diisocyanate, 1-isocyanato-1-methyl-4(3)-isocyanato-methyl cyclohexane, 2,4-hexahydrotoluene diisocyanate, 2,6-hexahydrotoluene diisocyanate, toluene diisocyanate, diphenylmethane diisocyanate, pentane diisocyanate, and mixtures of any of these.
Clause 3. The dual-cure epoxy and cyclic carbonate-containing urethane compound according to one of Clauses 1 and 2, wherein the compound having the formula HA-B-(X)ₙ (I) is selected from the group consisting of trimethylolpropane diallyl ether, ethylene glycol monoallyl ether, 3-butene-1-ol, 4-pentene-1-ol, 4-methyl-3-pentene-1-ol, 5-hexene-1-ol, 4-hexene-1-ol, 3-hexene-1-ol, 4-methyl-3-hexene-1-ol, 2-ethyl-4-pentene-1-ol, and oleyl alcohol.
Clause 4. The dual-cure epoxy and cyclic carbonate-containing urethane compound according to any one of Clauses 1 to 3, wherein the base is selected from the group consisting of sodium hydrogen carbonate, sodium hydroxide, sodium carbonate, potassium bicarbonate, potassium carbonate, potassium hydroxide, and mixtures of any of these.
Clause 5. The dual-cure epoxy and cyclic carbonate-containing urethane compound according to any one of Clauses 1 to 4, wherein the reaction of the isocyanate-functional compound occurs in the presence of a catalyst selected from the group consisting of dibutyl tin dilaurate, dibutyl tin diacetate, 1,4-diazabicyclo[2.2.2]octane (DABCO), and metal salts based on bismuth, zirconium, or zinc.
Clause 6. A thermoset polymer comprising a reaction product of dual-cure epoxy and cyclic carbonate-containing urethane compound according to any one of Clauses 1 to 5 and a curing agent.
Clause 7. The thermoset polymer according to Clause 6, wherein the curing agent comprises an amine curing agent selected from the group consisting of bis(para-aminocyclohexyl)methane, diethylene triamine, and 4,4'-methylene dianiline.
Clause 8. The thermoset polymer according to Clause 6, wherein the dual-cure epoxy and cyclic carbonate-containing urethane compound is self-crosslinked.
Clause 9. The thermoset polymer according to Clause 8, wherein self-crosslinking comprises heating the dual-cure epoxy and cyclic carbonate-containing urethane compound to a temperature of from 20 °C to 100 °C.
Clause 10. One of a coating, an adhesive, a sealant, a film, an elastomer, a casting, a foam, and a composite comprising the dual-cure epoxy and cyclic carbonate-containing urethane compound according to any one of Clauses 1 to 5.
Clause 11. A process for producing a dual-cure polyurethane resin containing at least one epoxy-functional group and at least one cyclic carbonate-functional group, the process comprising: (1) reacting an isocyanate-functional compound with (a) a cyclic carbonate compound having a hydroxyl group, and (b) one selected from the group consisting of (b1) allyl alcohol, and (b2) a compound of formula: HA-B-(X)ₙ (I), wherein, A is O, N, or S, n is an integer from 1 to 3, B is a linear or branched C₁-C₁₅ alkyl group, and X is-CH=CDE or X is -F-O-G-CH=CDE, in which, D or E are H or a linear C₁-C₅ alkyl group or a branched C₁-C₅ alkyl group, F and G are H or the same or different linear or branched C₁-C₁₅ alkyl group, to form an allyl-carbamate urethane containing cyclic carbonate; and (2) oxidizing the allyl-carbamate urethane containing cyclic carbonate to form an allyl-functional-carbamate, the oxidizing comprising (i) mixing the allyl-carbamate urethane containing a cyclic carbonate with a ketone, water, and a base, optionally a solvent, to form a mixture, and (ii) feeding an aqueous solution of oxidant into the mixture to form the dual-cure epoxy and cyclic carbonate-containing urethane compound, wherein the dual-cure epoxy and cyclic carbonate-containing urethane compound contains at least one epoxy-functional group and at least one cyclic carbonate functional group.
Clause 12. The process according to Clause 11, wherein the isocyanate-functional compound is selected from the group consisting 1,4-tetramethylene diisocyanate, 1,6-hexamethylene diisocyanate, 2,2,4-trimethyl-1,6-hexamethylene diisocyanate, 2,4,4-trimethyl-1,6-hexamethylene diisocyanate, 1,12-dodecamethylene diisocyanate, cyclohexane-1,3-diisocyanate, cyclohexane-1,4-diisocyanate, 1-isocyanato-2-isocyanato-methyl cyclopentane, 1-isocyanato-3,3,5-trimethyl-5-isocyanato-methylcyclohexane, bis-(4-isocyanatocyclohexyl)methane, 1,3-bis(isocyanatomethyl)-cyclohexane, 1,4-bis(isocyanatomethyl)-cyclohexane, bis-(4-isocyanato-3-methyl-cyclohexyl)-methane, α,α,α',α'-tetramethyl-1,3-xylene diisocyanate, α,α,α',α'-tetramethy-1,4-xylene diisocyanate, 1-isocyanato-1-methyl-4(3)-isocyanato-methyl cyclohexane, 2,4-hexahydrotoluene diisocyanate, 2,6-hexahydrotoluene diisocyanate, toluene diisocyanate, diphenylmethane diisocyanate, pentane diisocyanate, and mixtures of any of these.
Clause 13. The process according to one of Clauses 11 and 12, wherein the compound having the formula HA-B-(X)ₙ is selected from the group consisting of trimethylolpropane diallyl ether, ethylene glycol monoallyl ether, 3-butene-1-ol, 4-pentene-1-ol, 4-methyl-3-pentene-1-ol, 5-hexene-1-ol, 4-hexene-1-ol, 3-hexene-1-ol, 4-methyl-3-hexene-1-ol, 2-ethyl-4-pentene-1-ol, and oleyl alcohol.
Clause 14. The process according to any one of Clause 11 to 13, wherein the base is selected from the group consisting of sodium hydrogen carbonate, sodium hydroxide, sodium carbonate, potassium bicarbonate, potassium carbonate, potassium hydroxide, and mixtures of any of these.
Clause 15. The process according to any one of Clauses 11 to 14, wherein reaction of the isocyanate-functional compound occurs in the presence of a catalyst selected from the group consisting of dibutyl tin dilaurate, dibutyl tin diacetate, 1,4-diazabicyclo[2.2.2]octane (DABCO), and metal salts based on bismuth, zirconium, or zinc.
Clause 16. A thermoset polymer comprising a reaction product of the dual-cure epoxy and cyclic carbonate-containing urethane compound made according to the process of any one of Clauses 11 to 15 and a curing agent.
Clause 17. The thermoset polymer according to Clause 16, wherein the curing agent comprises an amine curing agent selected from the group consisting of bis(para-aminocyclohexyl)methane, diethylene triamine, and 4,4'-methylene dianiline.
Clause 18. The thermoset polymer according to Clause 16, wherein the dual-cure epoxy and cyclic carbonate-containing urethane compound is self-crosslinked.
Clause 19. The thermoset polymer according to Clause 18, wherein self-crosslinking comprises heating the dual-cure epoxy and cyclic carbonate-containing urethane compound to a temperature of from 20 °C to 100 °C.
Clause 20. One of a coating, an adhesive, a sealant, a film, an elastomer, a casting, a foam, and a composite comprising the dual-cure epoxy and cyclic carbonate-containing urethane compound made according to the process of any one of Clauses 11 to 15.

## Claims

1. A dual-cure epoxy and cyclic carbonate-containing urethane compound comprising an oxidized cyclic carbonate containing allyl-functional-carbamate which comprises a reaction product of a cyclic carbonate containing allyl-functional-carbamate, a ketone, water, and a base, optionally a solvent, wherein, the cyclic carbonate containing allyl-functional-carbamate comprises a reaction product of an isocyanate-functional compound with (a) a cyclic carbonate compound having a hydroxyl group, and (b) one selected from the group consisting of (b1) allyl alcohol, and (b2) a compound of the formula HA-B-(X)ₙ wherein, A is O, N, or S, n is an integer from 1 to 3, B is a linear or branched C₁-C₁₅ alkyl group, and X is -CH=CDE or X is -F-O-G-CH=CDE, in which, D or E are H or a linear C₁-C₅ alkyl group or a branched C₁-C₅ alkyl group, F and G are H or the same or different linear or branched C₁-C₁₅ alkyl group, and wherein the dual-cure epoxy and cyclic carbonate-containing urethane compound contains both epoxy and cyclic carbonate-functional groups.

2. The dual-cure epoxy and cyclic carbonate-containing urethane compound according to claim 1, wherein the isocyanate-functional compound is selected from the group consisting 1,4-tetramethylene diisocyanate, 1,6-hexamethylene diisocyanate, 2,2,4-trimethyl-1,6-hexamethylene diisocyanate, 2,4,4-trimethyl-1,6-hexamethylene diisocyanate, 1,12-dodecamethylene diisocyanate, cyclohexane-1,3-diisocyanate, cyclohexane-1,4-diisocyanate, 1-isocyanato-2-isocyanato-methyl cyclopentane, 1-isocyanato-3,3,5 -trimethyl-5-isocyanato-methylcyclohexane, bis-(4-isocyanatocyclohexyl)methane, 1,3-bis(isocyanatomethyl)-cyclohexane, 1,4-bis(isocyanatomethyl)-cyclohexane, bis-(4-isocyanato-3-methylcyclohexyl)-methane, α,α,α',α'-tetramethyl-1,3-xylene diisocyanate, α,α,α',α'-tetramethy-1,4-xylene diisocyanate, 1-isocyanato-1-methyl-4(3)-isocyanato-methyl cyclohexane, 2,4-hexahydrotoluene diisocyanate, 2,6-hexahydrotoluene diisocyanate, toluene diisocyanate, diphenylmethane diisocyanate, pentane diisocyanate, and mixtures of any of these.

3. The dual-cure epoxy and cyclic carbonate-containing urethane compound according to one of claims 1 and 2, wherein the compound having the formula HA-B-(X)ₙ (I) is selected from the group consisting of trimethylolpropane diallyl ether, ethylene glycol monoallyl ether, 3-butene-1-ol, 4-pentene-1-ol, 4-methyl-3-pentene-1-ol, 5-hexene-1-ol, 4-hexene-1-ol, 3-hexene-1-ol, 4-methyl-3-hexene-1-ol, 2-ethyl-4-pentene-1-ol, and oleyl alcohol.

4. The dual-cure epoxy and cyclic carbonate-containing urethane compound according to any one of claims 1 to 3, wherein the base is selected from the group consisting of sodium hydrogen carbonate, sodium hydroxide, sodium carbonate, potassium bicarbonate, potassium carbonate, potassium hydroxide, and mixtures of any of these.

5. The dual-cure epoxy and cyclic carbonate-containing urethane compound according to any one of claims 1 to 4, wherein the reaction of the isocyanate-functional compound occurs in the presence of a catalyst selected from the group consisting of dibutyl tin dilaurate, dibutyl tin diacetate, 1,4-diazabicyclo[2.2.2]octane (DABCO), and metal salts based on bismuth, zirconium, or zinc.

6. A thermoset polymer comprising a reaction product of dual-cure epoxy and cyclic carbonate-containing urethane compound according to any one of claims 1 to 5 and a curing agent.

7. The thermoset polymer according to claim 6, wherein the curing agent comprises an amine curing agent selected from the group consisting of bis(para-aminocyclohexyl)methane, diethylene triamine, and 4,4'-methylene dianiline.

8. One of a coating, an adhesive, a sealant, a film, an elastomer, a casting, a foam, and a composite comprising the dual-cure epoxy and cyclic carbonate-containing urethane compound according to any one of claims 1 to 5.

9. A process for producing a dual-cure polyurethane resin containing at least one epoxy-functional group and at least one cyclic carbonate-functional group, the process comprising: (1) reacting an isocyanate-functional compound with (a) a cyclic carbonate compound having a hydroxyl group, and (b) one selected from the group consisting of (b1) allyl alcohol, and (b2) a compound of formula: HA-B-(X)ₙ (I), wherein, A is O, N, or S, n is an integer from 1 to 3, B is a linear or branched C₁-C₁₅ alkyl group, and X is -CH=CDE or X is -F-O-G-CH=CDE, in which, D or E are H or a linear C₁-C₅ alkyl group or a branched C₁-C₅ alkyl group, F and G are H or the same or different linear or branched C₁-C₁₅ alkyl group, to form an allyl-carbamate urethane containing cyclic carbonate; and (2) oxidizing the allyl-carbamate urethane containing cyclic carbonate to form an allyl-functional-carbamate, the oxidizing comprising (i) mixing the allyl-carbamate urethane containing a cyclic carbonate with a ketone, water, and a base, optionally a solvent, to form a mixture, and (ii) feeding an aqueous solution of oxidant into the mixture to form the dual-cure epoxy and cyclic carbonate-containing urethane compound, wherein the dual-cure epoxy and cyclic carbonate-containing urethane compound contains at least one epoxy-functional group and at least one cyclic carbonate functional group.

10. The process according to claim 9, wherein the isocyanate-functional compound is selected from the group consisting 1,4-tetramethylene diisocyanate, 1,6-hexamethylene diisocyanate, 2,2,4-trimethyl-1,6-hexamethylene diisocyanate, 2,4,4-trimethyl-1,6-hexamethylene diisocyanate, 1,12-dodecamethylene diisocyanate, cyclohexane-1,3-diisocyanate, cyclohexane-1,4-diisocyanate, 1-isocyanato-2-isocyanato-methyl cyclopentane, 1-isocyanato-3,3,5-trimethyl-5-isocyanato-methylcyclohexane, bis-(4-isocyanatocyclohexyl)methane, 1,3-bis(isocyanatomethyl)-cyclohexane, 1,4-bis(isocyanatomethyl)-cyclohexane, bis-(4-isocyanato-3-methyl-cyclohexyl)-methane, α,α,α',α'-tetramethyl-1,3-xylene diisocyanate, α,α,α',α'-tetramethy-1,4-xylene diisocyanate, 1-isocyanato-1-methyl-4(3)-isocyanato-methyl cyclohexane, 2,4-hexahydrotoluene diisocyanate, 2,6-hexahydrotoluene diisocyanate, toluene diisocyanate, diphenylmethane diisocyanate, pentane diisocyanate, and mixtures of any of these.

11. The process according to one of claims 9 and 10, wherein the compound having the formula HA-B-(X)ₙ is selected from the group consisting of trimethylolpropane diallyl ether, ethylene glycol monoallyl ether, 3-butene-1-ol, 4-pentene-1-ol, 4-methyl-3-pentene-1-ol, 5-hexene-1-ol, 4-hexene-1-ol, 3-hexene-1-ol, 4-methyl-3-hexene-1-ol, 2-ethyl-4-pentene-1-ol, and oleyl alcohol.

12. The process according to any one of claims 9 to 11, wherein the base is selected from the group consisting of sodium hydrogen carbonate, sodium hydroxide, sodium carbonate, potassium bicarbonate, potassium carbonate, potassium hydroxide, and mixtures of any of these.

13. The process according to any one of claims 9 to 12, wherein reaction of the isocyanate-functional compound occurs in the presence of a catalyst selected from the group consisting of dibutyl tin dilaurate, dibutyl tin diacetate, 1,4-diazabicyclo[2.2.2]octane (DABCO), and metal salts based on bismuth, zirconium, or zinc.

14. A thermoset polymer comprising a reaction product of the dual-cure epoxy and cyclic carbonate-containing urethane compound made according to the process of any one of claims 9 to 13 and a curing agent.

15. The thermoset polymer according to claim 14, wherein the curing agent comprises an amine curing agent selected from the group consisting of bis(para-aminocyclohexyl)methane, diethylene triamine, and 4,4'-methylene dianiline.
